# EUROPEAN PATENT APPLICATION

(11) **EP 3 869 139 A1**
(43) Date of publication of application: **25.08.2021**
(21) Application number: 21154877.1
(22) Date of filing: 02.02.2021
(51) Int. Cl.: F28F 3/04, B33Y 80/00, F02C 7/14, F02C 7/18, F28D 7/16, F28D 9/00, F28D 21/00, F28F 21/08, F28F 7/02, F28F 1/02, F28F 9/00

(54) **HEAT EXCHANGER WITH UNDULATING PLATES**

(30) Priority: 19.02.2020 US 202016794768
(71) Applicant: Honeywell International Inc., Charlotte, NC 28202 (US)
(72) Inventor: BORGHESE, Joseph B., Charlotte, NC North Carolina 28202 (US); HERR, Jeffrey Ray, Charlotte, NC North Carolina 28202 (US); OEY, Yung K., Charlotte, NC North Carolina 28202 (US)
(74) Representative: LKGlobal UK Ltd.

(57) **Abstract**

A heat exchanger includes a first plate defining a first plurality of undulations that extend along a first axis and a second axis, and a second plate defining a second plurality of undulations. The second plate is spaced apart from and coupled to the first plate to define a first fluid flow passage. A first flow area of the first fluid flow passage is constant from a first inlet to a first outlet. The heat exchanger includes a third plate defining a third plurality of undulations. The third plate is spaced apart from and coupled to the second plate to define a second fluid flow passage. The second fluid flow passage is discrete from the first fluid flow passage. A second flow area of the second fluid flow passage is constant from a second inlet to a second outlet.

## Description

### TECHNICAL FIELD

The present disclosure generally relates to heat exchangers, and more particularly relates to a heat exchanger having undulating plates for use with a vehicle.

### BACKGROUND

Vehicles may include various systems that work together to provide power to the vehicle. For example, a vehicle such as an aircraft may include a gas turbine engine and systems that support the gas turbine engine in the generation of power to propel the aircraft. Due to the operating conditions associated with the vehicle, such as the aircraft, one or more heat exchangers may be employed to control a temperature of various fluids associated with the vehicle. In certain instances, due to the location of the heat exchanger on the vehicle, a size of the heat exchanger may be restricted to fit within the given space onboard the vehicle. The restriction in the size of the heat exchanger may result in limited heat transfer, which may not provide a desired amount of heat transfer for a working fluid onboard the vehicle.

Accordingly, it is desirable to provide a heat exchanger that is sized to fit within a restricted space, such as onboard a vehicle, while providing heat transfer that meets the requirements of a particular working fluid. In addition, it is also desirable to minimize a weight of a heat exchanger associated with the vehicle. Furthermore, other desirable features and characteristics of the present invention will become apparent from the subsequent detailed description and the appended claims, taken in conjunction with the accompanying drawings and the foregoing technical field and background.

### SUMMARY

According to various embodiments, provided is a heat exchanger. The heat exchanger includes a first plate defining a first plurality of undulations that extend along a first axis and a second axis, and a second plate defining a second plurality of undulations. The second plate is spaced apart from and coupled to the first plate to define a first fluid flow passage between the first plurality of undulations and the second plurality of undulations. The first fluid flow passage has a first inlet and a first outlet, and a first flow area of the first fluid flow passage is constant from the first inlet to the first outlet. The heat exchanger includes a third plate defining a third plurality of undulations. The third plate is spaced apart from and coupled to the second plate to define a second fluid flow passage between the second plurality of undulations and the third plurality of undulations. The second fluid flow passage is discrete from the first fluid flow passage and has a second inlet and a second outlet. A second flow area of the second fluid flow passage is constant from the second inlet to the second outlet.

The second plurality of undulations are defined such that a peak of one of the second plurality of undulations is coaxially aligned with a peak of one of the first plurality of undulations and a peak of one of the third plurality of undulations. The heat exchanger includes at least one first fin within the first fluid flow passage that interconnects the first plate with the second plate, and at least one second fin within the second fluid flow passage that interconnects the second plate with the third plate. At least the at least one first fin has a plurality of fin undulations that correspond with at least the first plurality of undulations. At least the at least one first fin is perforated. The first plate, the second plate and the third plate are parallel to each other and equidistant from each other. The first plurality of undulations, the second plurality of undulations and the third plurality of undulations have the same pattern. The first plurality of undulations, the second plurality of undulations and the third plurality of undulations are each defined by a sinusoidal wave that extends along the first axis and the second axis. The heat exchanger includes a plurality of the first plate, the second plate and the third plate that are integrally formed between a first housing plate and a second housing plate. The heat exchanger includes at least one first fin within the first fluid flow passage that interconnects the first plate with the second plate. The at least one first fin is comprised of a plurality of segments, and each segment of the plurality of segments transverse to an axis that extends parallel to a flow direction through the first fluid flow passage such that the at least one fin is wavy. The heat exchanger includes at least one first fin within the first fluid flow passage that interconnects the first plate with the second plate. The at least one first fin includes a plurality of fin undulations and a plurality of louvers. The plurality of fin undulations correspond with at least the first plurality of undulations, and each louver of the plurality of louvers including a protrusion that extends outwardly from either a first face of the at least one first fin or a second face of the at least one first fin. Each of the first plate, the second plate and the third plate has a first end, a second end, a third end and a fourth end, and the first plurality of undulations, the second plurality of undulations and the third plurality of undulations are spaced apart from each of the first end, the second end, the third end and the fourth end of the respective one of the first plate, the second plate and the third plate. Each of the first plate, the second plate and the third plate has a first end, a second end, a third end and a fourth end, and the first plurality of undulations, the second plurality of undulations and the third plurality of undulations extend along an entirety of the respective one of the first plate, the second plate and the third plate from the respective first end to the respective third end and from the respective second end to the respective fourth end. The first plate is integrally formed with the second plate and the second plate is integrally formed with the third plate.

Further provided is a heat exchanger. The heat exchanger includes a first plate defining a first plurality of undulations that extend along a first axis and a second axis, and a second plate defining a second plurality of undulations. The second plate is spaced apart from and coupled to the first plate to define a first fluid flow passage between the first plurality of undulations and the second plurality of undulations. The first fluid flow passage has a first inlet and a first outlet, and a first flow area of the first fluid flow passage is constant from the first inlet to the first outlet. The heat exchanger includes a third plate defining a third plurality of undulations. The third plate is spaced apart from and coupled to the second plate to define a second fluid flow passage between the second plurality of undulations and the third plurality of undulations. The second fluid flow passage is discrete from the first fluid flow passage and has a second inlet and a second outlet. A second flow area of the second fluid flow passage is constant from the second inlet to the second outlet. The first plate, the second plate and the third plate are parallel to each other and the first plurality of undulations, the second plurality of undulations and the third plurality of undulations have the same pattern.

The heat exchanger includes at least one first fin within the first fluid flow passage that interconnects the first plate with the second plate and at least one second fin within the second fluid flow passage that interconnects the second plate with the third plate. Each of the at least one first fin and the at least one second fin has a plurality of fin undulations that correspond with at least the first plurality of undulations. At least the at least one first fin is perforated. The first plate, the second plate and the third plate are equidistant from each other. The first plurality of undulations, the second plurality of undulations and the third plurality of undulations are each defined by a sinusoidal wave that extends along the first axis and the second axis. The heat exchanger includes a plurality of the first plate, the second plate and the third plate that are integrally formed with a first housing plate and a second housing plate.

### DESCRIPTION OF THE DRAWINGS

The exemplary embodiments will hereinafter be described in conjunction with the following drawing figures, wherein like numerals denote like elements, and wherein:
FIG. 1 is a functional block diagram of a thermodynamic system, which in one example, is onboard a vehicle and includes an exemplary heat exchanger with undulating plates;
FIG. 2 is a perspective view of a core of the heat exchanger of FIG. 1;
FIG. 3 is a cross-sectional perspective view of the core of the heat exchanger of FIG. 2, taken along line 3-3 of FIG. 2, which illustrates the undulating plates and a plurality of fins associated with the undulating plates;
FIG. 4 is a cross-sectional view of the core of the heat exchanger of FIG. 2, taken along line 4-4 of FIG. 2;
FIG. 4A is a detail end view of a portion of the core of the heat exchanger of FIG. 2;
FIG. 5 is a perspective detail view of a plurality of the undulating plates associated with the core of the heat exchanger of FIG. 2;
FIG. 6 is a cross-sectional perspective view of the core of the heat exchanger of FIG. 2, taken along line 6-6 of FIG. 2, which illustrates the undulating plates and a plurality of fins associated with the undulating plates;
FIG. 7 is a cross-sectional end view of the core of the heat exchanger of FIG. 2, taken along line 3-3 of FIG. 2;
FIG. 8 is a cross-sectional end view of the core of the heat exchanger of FIG. 2, taken along line 6-6 of FIG. 2;
FIG. 9 is a cross-sectional view of an exemplary fin for use with the undulating plates of the core of the heat exchanger of FIG. 2;
FIG. 9A is a cross-sectional detail view of the fin of FIG. 9;
FIG. 10 is a cross-sectional view of another exemplary fin for use with the undulating plates of the core of the heat exchanger of FIG. 2;
FIG. 11 is a cross-sectional end view of the exemplary fin of FIG. 10;
FIG. 12 is a cross-sectional view of another exemplary fin for use with the undulating plates of the core of the heat exchanger of FIG. 2; and
FIG. 13 is a perspective detail view of another exemplary plurality of undulating plates for the core of the heat exchanger of FIG. 2.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. In addition, those skilled in the art will appreciate that embodiments of the present disclosure may be practiced in conjunction with any type of thermodynamic system that would benefit from having a heat exchanger that is sizable to fit into a given space while providing enhanced surface area for heat transfer, and the heat exchanger described herein for use onboard a vehicle is merely one exemplary embodiment according to the present disclosure. In addition, while the heat exchanger is described herein as being used onboard a vehicle, such as a bus, motorcycle, train, motor vehicle, marine vessel, aircraft, rotorcraft and the like, the various teachings of the present disclosure can be used with a stationary platform. Further, it should be noted that many alternative or additional functional relationships or physical connections may be present in an embodiment of the present disclosure. In addition, while the figures shown herein depict an example with certain arrangements of elements, additional intervening elements, devices, features, or components may be present in an actual embodiment. It should also be understood that the drawings are merely illustrative and may not be drawn to scale.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "transverse" denotes an axis that crosses another axis at an angle such that the axis and the other axis are neither substantially perpendicular nor substantially parallel. Also as used herein, the terms "integrally formed" and "integral" mean one-piece and exclude brazing, fasteners, or the like for maintaining portions thereon in a fixed relationship as a single unit.

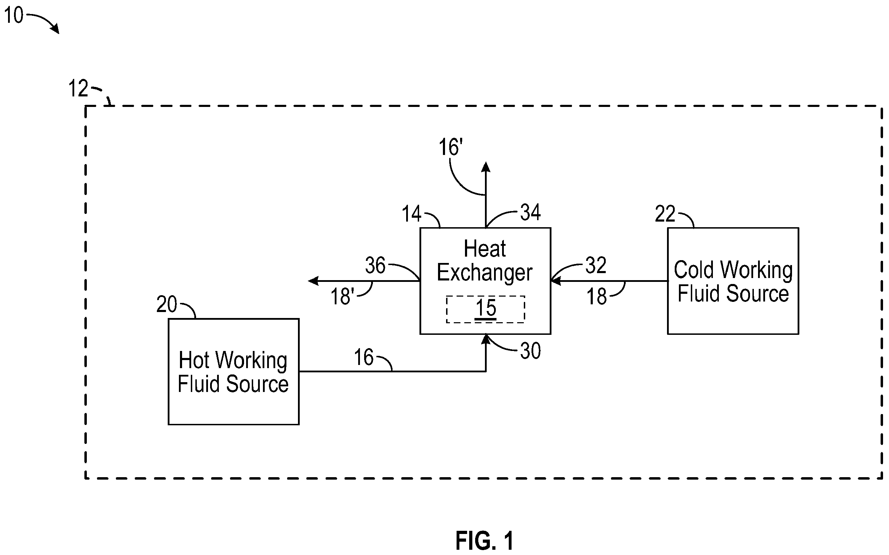

With reference to FIG. 1, a functional block diagram of thermodynamic system 10 onboard a vehicle 12, such as an aircraft, is shown. In this example, the thermodynamic system 10 includes a heat exchanger 14, which transfers heat from a hot working fluid 16 to a cold working fluid 18 to reduce a temperature of the hot working fluid 16. The hot working fluid 16 is provided from a hot fluid source 20, while the cold working fluid 18 is provided from a cold fluid source 22. In one example, the hot fluid source 20 includes, but is not limited to: a compressor section associated with the gas turbine engine that supplies compressed air as the hot working fluid 16; a lubrication system that supplies engine lubrication fluid, such as oil, as the hot working fluid 16; an electronic system that supplies coolant as the hot working fluid 16; etc. In one example, the cold fluid source 22 includes, but is not limited to: a fan of a gas turbine engine associated with the vehicle 12 that supplies fan air as the cold working fluid 18; a ram air inlet associated with the vehicle 12 that supplies atmospheric air as the cold working fluid 18; a refrigerated coolant supply associated with the vehicle 12 that supplies refrigerated coolant as the cold working fluid 18; etc.

As will be discussed, the heat exchanger 14 receives the hot working fluid 16 and the cold working fluid 18, and via convective and conductive heat transfer, transfers heat from the hot working fluid 16 to the cold working fluid 18 to output reduced temperature working fluid 16' and increased temperature working fluid 18'. Thus, in this example, the heat exchanger 14 includes a core 15 fluidly coupled to or in fluid communication with a hot manifold or inlet 30, a cold manifold or inlet 32, a reduced temperature hot manifold or first outlet 34 and an increased temperature cold manifold or second outlet 36. As will also be discussed, given the structure of the core 15 of the heat exchanger 14, the heat exchanger 14 may be manufactured to be positioned within limited or restricted spaces, while still providing sufficient surface area for convective heat transfer to meet the cooling requirements associated with the thermodynamic system 10 with a reduced weight.

Generally, in the example of oil as the hot working fluid 16, the oil has a temperature between about 175 degrees Fahrenheit to about 375 degrees Fahrenheit, while the cold working fluid 18, for example, refrigerated coolant, has a temperature of about negative 20 degrees Fahrenheit to 200 degrees Fahrenheit. In this example, the core 15 promotes heat transfer between the hot working fluid 16 and the cold working fluid 18 at a rate of about 5 to about 20 kilowatts (kW). In the example of an electronic system with coolant as the hot working fluid 16, the coolant has a temperature between about 100 degrees Fahrenheit to about 170 degrees Fahrenheit, while the cold working fluid 18, for example, refrigerated coolant, such as Tetrafluoroethane (r134a), has a temperature of about 35 degrees Fahrenheit to 80 degrees Fahrenheit. In this example, the core 15 promotes heat transfer between the hot working fluid 16 and the cold working fluid 18 at a rate of about 5 to about 100 kilowatts (kW). In the example of compressor air as the hot working fluid 16, the compressor air has a temperature, which may be in excess of 1200 degrees Fahrenheit, while the cold working fluid 18, for example, cooling air, has a temperature of about 100 degrees Fahrenheit to 600 degrees Fahrenheit. In this example, the core 15 promotes heat transfer between the hot working fluid 16 and the cold working fluid 18 at a rate of about 100 to about 1000 kilowatts (kW). It should be noted that the above is merely an example, and that the values may vary based on the configuration, size and requirements of the core 15 of the heat exchanger 14.

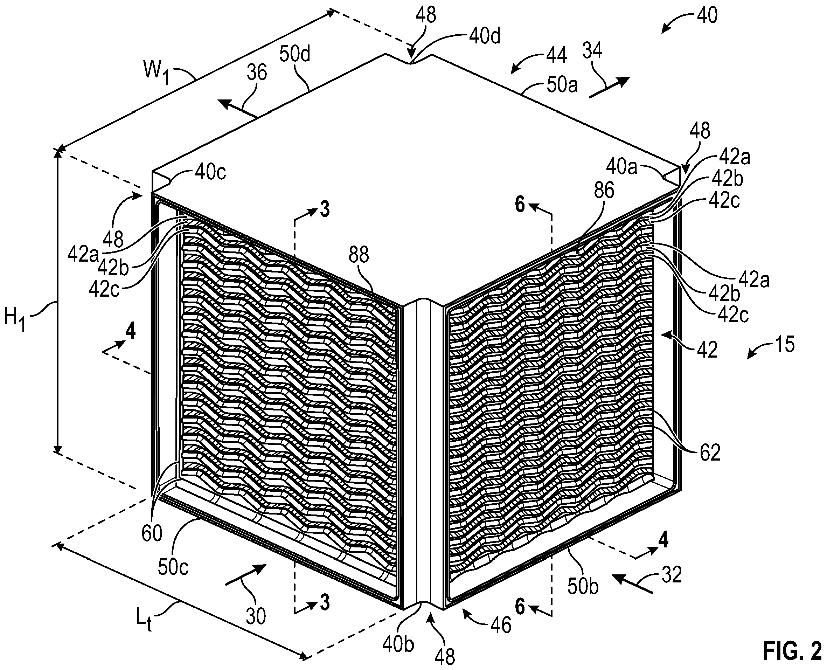

In one example, with reference to FIG. 2, a perspective view of the core 15 of the heat exchanger 14 is shown. In this example, the core 15 of the heat exchanger 14 is composed of a metal or metal alloy, including, but not limited to, aluminum, Inconel, stainless steel and titanium. The core 15 of the heat exchanger 14 is integrally formed, monolithic or one-piece, and in this example, is formed via additive manufacturing. For example, the core 15 of the heat exchanger 14 is formed via direct metal laser sintering (DMLS), however, other additive manufacturing processes may be employed, including, but not limited to micro-pen, selective laser sintering, laser wire, electron beam melting, laser engineered net shaping, direct metal deposition, etc. In this example, the heat exchanger 14 has a width W1 of about 2 inches (in.) to about 24 inches (in.) and a height H1 of about 2 to about 24 inches (in.) and a length Lt of about 2 inches (in.) to 72 inches (in.). It should be noted, however, that the heat exchanger 14 may have any desired width, length and height for a given space within the vehicle 12 or for the particular application. The core 15 of the heat exchanger 14 includes a housing 40 and a plurality of plates 42. As discussed, the housing 40 is integrally formed with the plurality of plates 42. In this example, the housing 40 includes a first, top housing plate 44 and an opposite second, bottom housing plate 46. In this example, the housing 40 is rectangular, and includes a plurality of flanges 48 at each corner 40a-40d of the housing 40 that extend between the top housing plate 44 and the bottom housing plate 46. It should be noted that while the core 15 of the heat exchanger 14 is described and illustrated herein as being rectangular, the core 15 of the heat exchanger 14 may have any desired shape, such as cylindrical, etc.

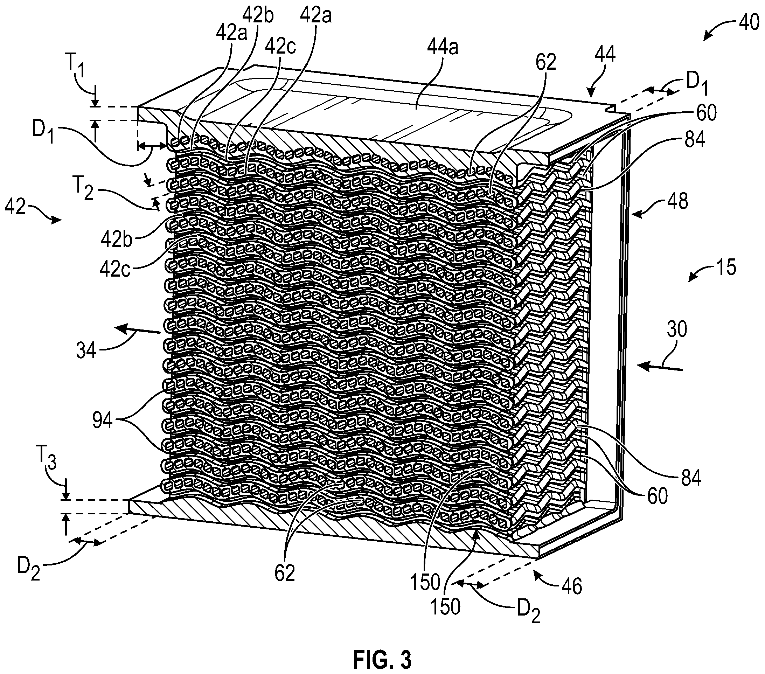

In one example, with reference to FIG. 3, the top housing plate 44 has a thickness T1 that is different and, in this example, greater than a thickness T2 of each one of the plates 42. In one example, the thickness T1 is about 0.040 inches (in.) to about 0.125 inches (in.), and the thickness T2 is about 0.005 inches (in.) to about 0.020 inches (in.) depending upon the material from which the top housing plate 44 and the plates 42 are formed. The top housing plate 44 also extends for a distance D1 beyond the plates 42 on each side 50a-50d of the housing 40 between the corners 40a-40d (FIG. 2). Stated another way, the top housing plate 44 extends for the distance D1 between each of the corners 40a-40d to cooperate with the bottom housing plate 46 to define each of the hot inlet 30, the cold inlet 32, the first outlet 34 and the second outlet 36. Generally, the distance D1 may have any predetermined distance to assist in defining the respective one of the hot inlet 30, the cold inlet 32, the first outlet 34 and the second outlet 36. The top housing plate 44 generally extends over an entirety of the plates 42 and defines a top exterior surface of the housing 40. The top housing plate 44 may include a recessed surface 44a, if desired, to minimize weight. The thickness of the top housing plate 44 in the area of the recessed surface 44a may be less than the thickness T1, but greater than the thickness T2. The top housing plate 44 is integrally formed with one of the plates 42.

The bottom housing plate 46 has a thickness T3 that is different and, in this example, greater than the thickness T2 of each one of the plates 42. In one example, the thickness T3 is about 0.040 inches (in.) to about 0.125 inches (in) depending upon the material from which the bottom housing plate 46 is formed. The bottom housing plate 46 may include a recessed surface, if desired. The bottom housing plate 46 also extends for a distance D2 beyond the plates 42 on each side 50a-50d of the housing 40 between the corners 40a-40d (FIG. 2). Stated another way, the bottom housing plate 46 extends for the distance D2 between each of the corners 40a-40d to cooperate with the top housing plate 44 to define each of the hot inlet 30, the cold inlet 32, the first outlet 34 and the second outlet 36. Generally, the distance D2 may have any predetermined distance to assist in defining the respective one of the hot inlet 30, the cold inlet 32, the first outlet 34 and the second outlet 36. The distance D2 may also be equal to the distance D1. The bottom housing plate 46 generally extends over an entirety of the plates 42 and defines a bottom exterior surface of the housing 40. The bottom housing plate 46 is integrally formed with one of the plates 42.

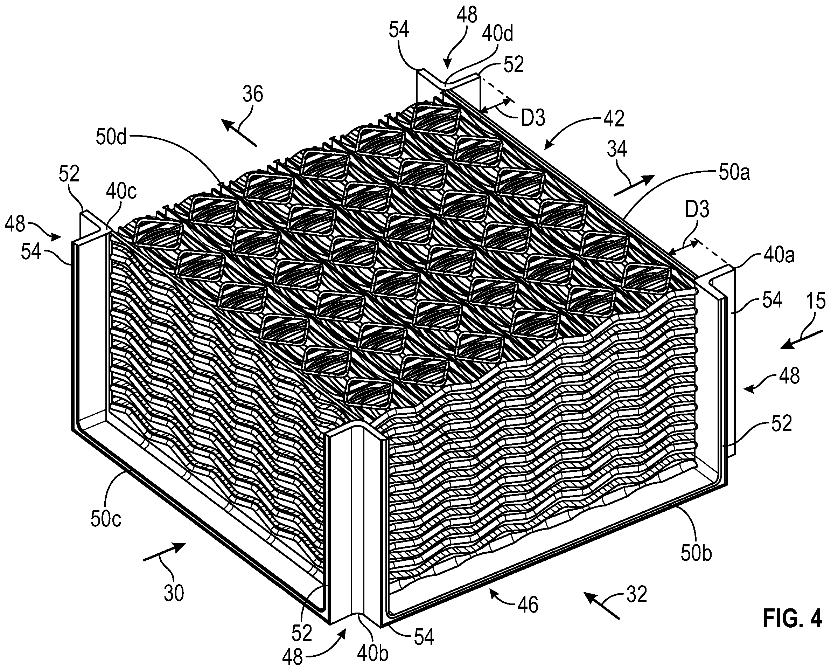

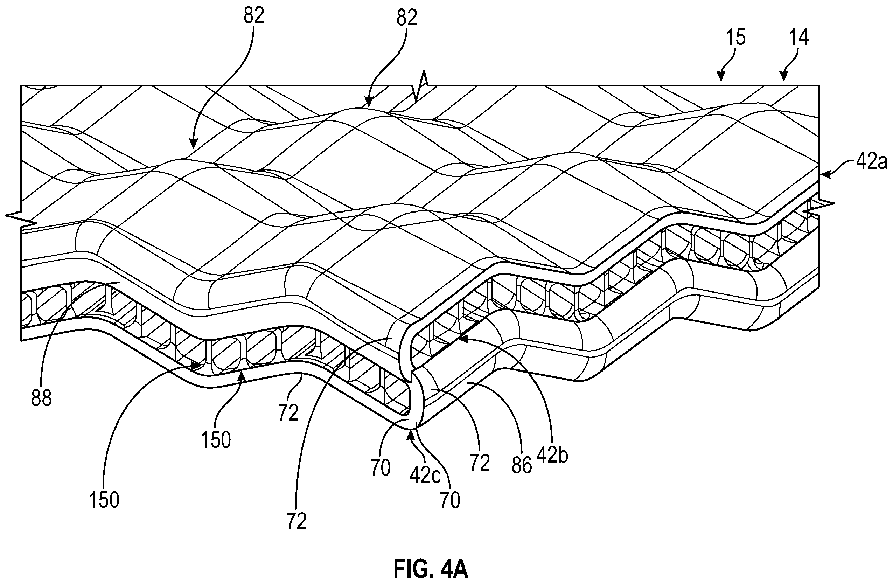

With reference back to FIG. 2, the flanges 48 provide an attachment surface to couple, via welding, for example, the hot inlet 30, the cold inlet 32, the first outlet 34 and the second outlet 36 to the heat exchanger 14. The flanges 48 cooperate with the top housing plate 44 and the bottom housing plate 46 to define the hot inlet 30, the cold inlet 32, the first outlet 34 and the second outlet 36. In this example, with reference to FIG. 4, the flanges 48 are substantially L-shaped, and include a first leg 52 and a second leg 54. The first leg 52 is substantially perpendicular to the second leg 54. The first leg 52 and the second leg 54 each extend for a predetermined distance D3 based on the size of the heat exchanger 14. The distance D3 may be equal to the distance D1 and/or the distance D2. The distance D3 is sized to cooperate with the top housing plate 44 and the bottom housing plate 46 to define the hot inlet 30, the cold inlet 32, the first outlet 34 and the second outlet 36. Generally, for each side 50a-50d of the housing 40, the respective distance D1 of the top housing plate 44, the respective distance D2 of the bottom housing plate 46, the respective one of the first legs 52 and the respective one of the second legs 54 defines a respective one of the hot inlet 30, the cold inlet 32, the first outlet 34 and the second outlet 36. Each of the hot inlet 30 and the cold inlet 32 may be coupled to the respective one of the hot fluid source 20 and the cold fluid source 22 via suitable ducting, tubing, etc. The first outlet 34 and the second outlet 36 may be provided to a downstream consumer or returned to the hot fluid source 20 and the cold fluid source 22 via suitable ducting, tubing etc.

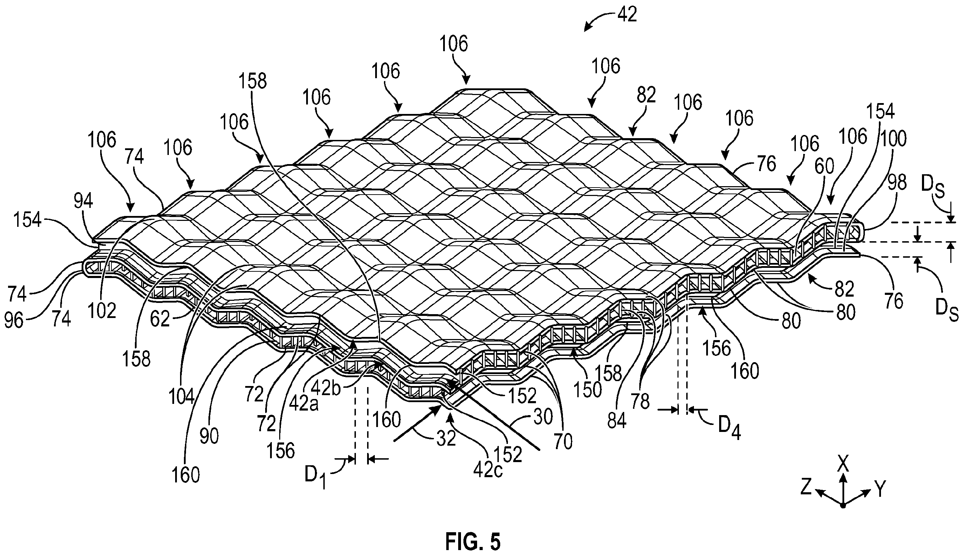

With reference back to FIG. 2, the plates 42 are defined between the top housing plate 44 and the bottom housing plate 46, and are integrally formed with the top housing plate 44 and the bottom housing plate 46. Each of the plates 42 are parallel to each other and to each of the top housing plate 44 and the bottom housing plate 46. Each of the plates 42 are parallel to each other along an X-axis (FIG. 5). Each of the plates 42 are also equidistant from each other. With reference to FIG. 5, three plates 42a-42c of the plates 42 are shown without the housing 40 for clarity. In FIG. 5, two plates 42a, 42b cooperate to define a hot fluid flow passage 60 and two plates 42b, 42c cooperate to define a cold fluid flow passage 62. Thus, each trio of plates 42a-42c defines a pair of flow passages, such as the hot fluid flow passage 60 and the cold fluid flow passage 62. Each of the plates 42a-42c are spaced a distance Ds apart from each other. The distance Ds is about 0.10 inches (in.) to about 0.50 inches (in.) and is the same between each of the plates 42 as the plates 42 are equidistant. It should be noted that in certain embodiments, the plates 42 may not be equidistant from each other so long as the plates 42 are parallel and the flow area is constant. In other words, in certain embodiments, a passage height may vary between passages. With brief reference to FIG. 2, the trio of plates 42a-42c are repeatable between the top housing plate 44 and the bottom housing plate 46 to define a number of hot fluid flow passages 60 and cold fluid flow passages 62 within the heat exchanger 14. The heat exchanger 14 includes a predetermined number of the trios of the plates 42a-43c based on the predetermined heat transfer requirement associated with the heat exchanger 14. As each trio of plates 42a-42c is the same, a single trio of plates 42a-42c will be described herein with the understanding that the remainder of the trios of plates 42 associated with the heat exchanger 14 is the same.

With reference back to FIG. 5, each plate 42a-42c includes a first end 70, a second end 72, a third end 74, a fourth end 76, a first surface 78, a second surface 80 and a plurality of undulations 82. The first end 70 is opposite the third end 74, and the second end 72 is opposite the fourth end 76. The first surface 78 is also opposite the second surface 80. The first end 70 of the plate 42a is spaced apart from the first end 70 of the plate 42b to define an inlet 84 for one of the hot fluid flow passages 60. With brief reference to FIG. 4A, the first end 70 of the plate 42c is coupled to or integrally formed with the first end 70 of the plate 42b by a bullnose portion 86 to enclose the cold fluid flow passage 62. The second end 72 of the plate 42a is coupled to or integrally formed with the second end 72 of the plate 42b by a second bullnose portion 88 to enclose the hot fluid flow passage 60. With reference back to FIG. 5, the second end 72 of the plate 42c is spaced apart from the second end 72 of the plate 42b to define an inlet 90 for the cold fluid flow passage 62. The third end 74 of the plate 42a is spaced apart from the third end 74 of the plate 42b to define an outlet 94 for one of the hot fluid flow passages 60. The third end 74 of the plate 42c is coupled to or integrally formed with the third end 74 of the plate 42b by a third bullnose portion 96 (FIG. 2) to enclose the cold fluid flow passage 62. The fourth end 76 of the plate 42a is coupled to or integrally formed with the fourth end 76 of the plate 42b by a fourth bullnose portion 98 (FIG. 2) to enclose the hot fluid flow passage 60. The fourth end 76 of the plate 42c is spaced apart from the fourth end 76 of the plate 42b to define an outlet 100 for the cold fluid flow passage 62.

If the plate 42a is at the top of the plates 42, the first surface 78 of the plate 42a is integrally formed with the top housing plate 44. For trios positioned below the first trio of plates 42a-42c, the first surface 78 of the plate 42a cooperates with the second surface 80 of the plate 42c of an adjacent trio of plates 42a-42c to define one of the cold fluid flow passages 62 (FIG. 2). The second surface 80 of the plate 42a is spaced apart from the first surface 78 of the plate 42b and cooperates with the first surface 78 of the plate 42b to define the hot fluid flow passage 60. The first surface 78 of the plate 42b is spaced apart from the second surface 80 of the plate 42a and cooperates with the second surface 80 of the plate 42a to define the hot fluid flow passage 60. The second surface 80 of the plate 42b is spaced apart from the first surface 78 of the plate 42c and cooperates with the first surface 78 of the plate 42c to define the cold fluid flow passage 62. The first surface 78 of the plate 42c is spaced apart from the second surface 80 of the plate 42b to define the cold fluid flow passage 62. If the plate 42c is at the bottom of the plates 42, the second surface 80 of the plate 42c is integrally formed with the bottom housing plate 46. For trios positioned above the last trio of plates 42a-42c in the heat exchanger 14, the second surface 80 of the plate 42c cooperates with the first surface 78 of the plate 42c of an adjacent trio of plates 42a-42c to define one of the hot fluid flow passages 60 (FIG. 2).

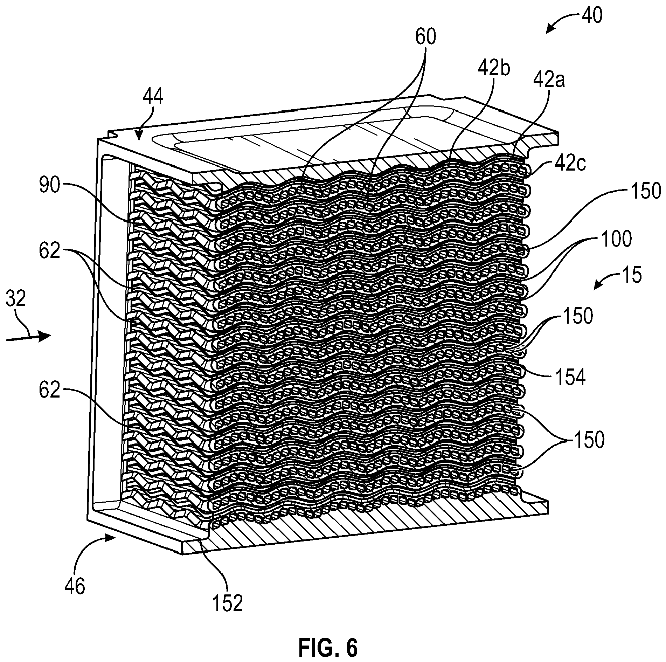

For example, with reference to FIG. 3, a plurality of the hot fluid flow passages 60 defined by the trios of plates 42a-42c associated with the heat exchanger 14 are shown. Each of the hot fluid flow passages 60 alternate with a respective one of a plurality of the cold fluid flow passages 62. With reference to FIG. 6, a plurality of the cold fluid flow passages 62 defined by the trios of plates 42a-42c associated with the heat exchanger 14 are shown. Each of the cold fluid flow passages 62 alternate with a respective one of the plurality of the hot fluid flow passages 60. It should be noted that the top passage may be either a hot or a cold passage, the bottom passage may be either a hot or a cold passage, and thus, the arrangement shown herein is merely an example.

With reference back to FIG. 5, the plurality of undulations 82 are defined in each of the plates 42a-42c. The plurality of undulations 82 are defined to extend from the first end 70 to the third end 74, and from the second end 72 to the fourth end 76. Generally, the plurality of undulations 82 cover an entirety of each of the plates 42. The plurality of undulations 82 are defined such that both the first surface 78 and the second surface 80 follow the undulations 82. In one example, the plurality of undulations 82 are defined with a smooth periodic oscillation with a constant amplitude that has a plurality of peaks 102 and a plurality of valleys 104. In this example, the plurality of undulations 82 are defined as a sinusoidal wave, and the plurality of undulations 82 are in phase. It should be noted that in other embodiments, the plurality of undulations 82 may be defined with a different shape.

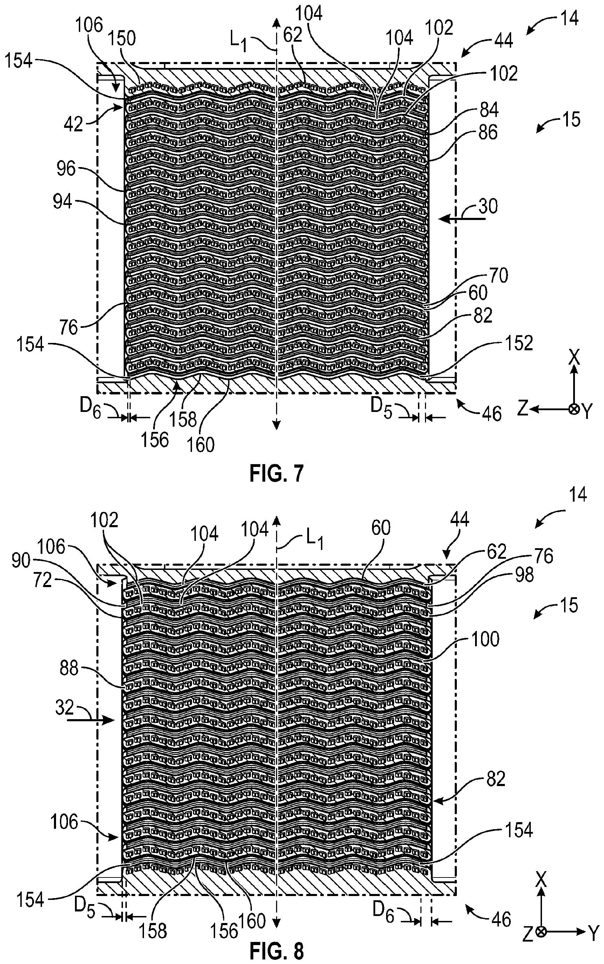

In this example, the plurality of undulations 82 may be arranged in rows 106 from the second end 72 to the fourth end 76 and from the first end 70 to the third end 74 such that the plurality of undulations 82 are defined in two dimensions. Stated another way, the plurality of undulations 82 extend along a first, Y-axis and a second, Z-axis. Each row 106 includes a sub-plurality of the peaks 102 and a sub-plurality of the valleys 104. The plurality of undulations 82 break up the boundary layer of the hot fluid and the cold fluid as the hot fluid and the cold fluid moves through the respective one of the hot fluid flow passage 60 and the cold fluid flow passage 62. By breaking up the boundary layer, the heat transfer between the hot fluid and the cold fluid is increased. As each of the plates 42 are parallel to each other, each of the plurality of peaks 102 are coaxially aligned along a longitudinal axis L1 of the heat exchanger 14, as shown in FIGS. 7 and 8. In addition, each of the plurality of valleys 104 are coaxially aligned along the longitudinal axis L1 of the heat exchanger 14. In addition, due to the sinusoidal wave that defines of the plurality of undulations 82, the flow area is constant from each inlet 84 of the hot fluid flow passage 60 to the outlet 94 of the respective hot fluid flow passage 60. Further, the flow area is constant from each inlet 90 of the cold fluid flow passage 62 to the outlet 100 of the respective cold fluid flow passage 62. Stated another way, with reference to FIG. 7, the flow area of each of the hot fluid flow passages 60 is constant in the Z-axis. With reference to FIG. 8, the flow area of each of the cold fluid flow passages 62 is constant in the Y-axis. By providing the flow area constant in each of the hot fluid flow passages 60 and the cold fluid flow passages 62, the pressure drop is minimized, which is important as the amount of available pressure drop may be limited. As used herein, the "flow area" is an area of the respective hot fluid flow passage 60 or cold fluid flow passage 62 between the adjacent plates 42, which is configured to receive the respective working fluid.

In various embodiments, with reference back to FIG. 5, the plates 42 may be interconnected by a plurality of fins 150. The fins 150 may be integrally formed with adjacent plates 42, and may assist in heat transfer between the hot fluid and the cold fluid. The fins 150 may also assist in the manufacture of the plurality of plates 42 via additive manufacturing by providing supports between the adjacent plates 42. The plurality of fins 150 are defined between the plates 42 to extend parallel to a direction of flow through the respective hot fluid flow passage 60 and cold fluid flow passage 62 defined by the plates 42. Each fin 150 cooperates with the respective inlet 84 of the hot fluid flow passage 60 or the inlet 90 of the cold fluid flow passage 62 to subdivide the hot fluid flow passage 60 and the cold fluid flow passage 62, respectively, into a plurality of sub-flow passages. These sub-flow passages extend over the length of the plates 42 from the first end 70 to the third end 74 and the second end 72 to the fourth end 76, respectively, to increase heat transfer. In one example, each of the hot fluid flow passage 60 and the cold fluid flow passage 62 may each have about 8 fins per inch (in.) to about 60 fins per inch (in.) of the fins 150. Each of the fins 150 has a thickness, which is about 0.003 inches (in.) to about 0.012 inches (in.) depending upon the material from which the fins 150 are formed. It should be noted that the thickness of the fins 150 is merely exemplary, and may vary based on the configuration, size and requirements of the heat exchanger 14.

With regard to the hot fluid flow passage 60, the fins 150 may be spaced apart by a distance D4 from the second end 72 to the fourth end 76; and for the cold fluid flow passage 62, the fins 150 may be spaced apart from the first end 70 to the third end 74 by the distance D4. Generally, with brief reference to FIGS. 7 and 8, the fins 150 are spaced a distance D5 apart from the respective inlet 84 of the hot fluid flow passage 60 and the inlet 90 of the cold fluid flow passage 62. The fins 150 are spaced a distance D6 apart from the respective outlet 94 of the hot fluid flow passage 60 and the outlet 100 of the cold fluid flow passage 62. The distances D4, D5 and D6 are each predefined based on the requirements associated with the core 15 of the heat exchanger 14. By having the fins 150 recessed relative to the inlets 84, 90 and the outlets 94, 100, a pressure drop into and out of the heat exchanger 14 is reduced.

Each fin 150 has an upstream first end 152 and an opposite downstream second end 154. Each fin 150 is substantially planar or flat, and in this example, has a rectangular cross section, which is solid (FIG. 6). As the fins 150 are defined between the plates 42, the fins 150 also each include a plurality of fin undulations 156, which correspond with the plurality of undulations 82. In one example, the plurality of fin undulations 156 are defined with a smooth periodic oscillation with a constant amplitude that has a plurality of peaks 158 and a plurality of valleys 160. In this example, the plurality of fin undulations 156 are also defined as a sinusoidal wave. It should be noted that in other embodiments, the plurality of fin undulations 156 may be defined with a different shape. The orientation of the fins 150 between the plates 42 may vary. The fins 150 may be orientated straight in the direction of flow, and the plurality of undulations 82 may be in a direction that is perpendicular to the plates 42.

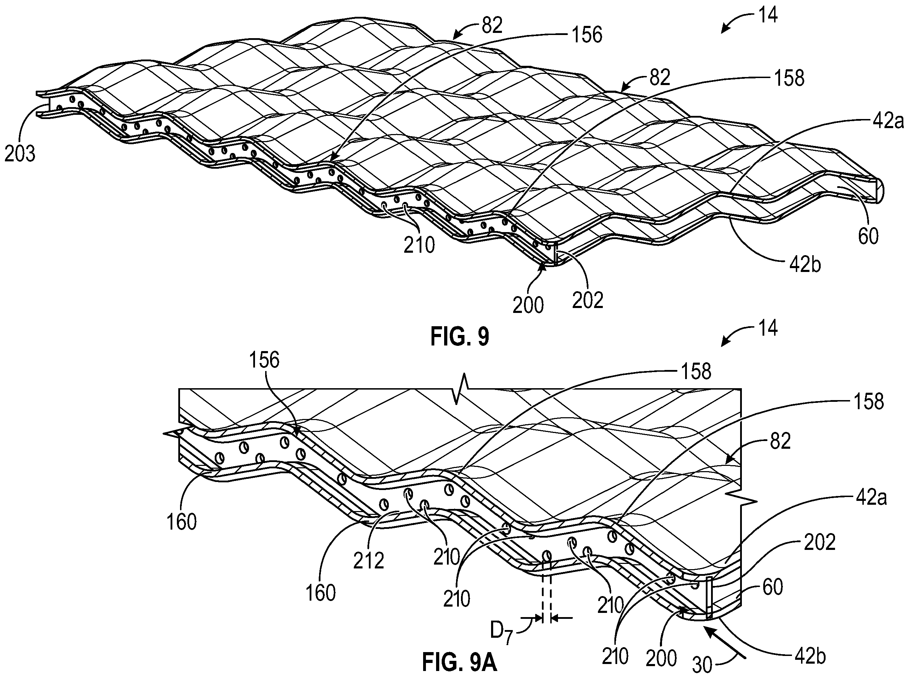

It should be noted that in other embodiments, the fins 150 may be configured differently to promote heat transfer between adjacent plates 42. For example, with reference to FIGS. 9 and 9A, a fin 200 is shown. As the fin 200 includes the same or similar components as the fin 150 discussed with regard to FIGS. 1-8, the same reference numerals will be used to denote the same or similar components. FIG. 9 is a cross-sectional view of the core 15 of the heat exchanger, which shows the fin 200, while FIG. 9A is a cross-sectional detail view of a portion of the fin 200. The fin 200 may be used with the plates 42 instead of or in combination with the fin 150 discussed with regard to FIGS. 1-8. The spacing of the fins 200 may vary across the width of each passage.

The fins 200 may be integrally formed with adjacent plates 42, and may assist in heat transfer between the hot fluid and the cold fluid. The fins 200 may also assist in the manufacture of the plurality of plates 42 via additive manufacturing by providing supports between the adjacent plates 42. The plurality of fins 200 are defined between the plates 42 to extend parallel to a direction of flow through the respective hot fluid flow passage 60 and cold fluid flow passage 62 defined by the plates 42 (FIG. 5). Each fin 200 cooperates with the respective inlet 84 of the hot fluid flow passage 60 or the inlet 90 of the cold fluid flow passage 62 (FIG. 5) to subdivide the hot fluid flow passage 60 and the cold fluid flow passage 62, respectively, into a plurality of sub-flow passages. These sub-flow passages extend over the length of the plates 42 from the first end 70 to the third end 74 and the second end 72 to the fourth end 76 (FIG. 5), respectively, to increase heat transfer surface area. In one example, each of the hot fluid flow passage 60 and the cold fluid flow passage 62 may each have about 8 fins per inch (in.) to about 60 fins per inch (in.) of the fins 200.

With regard to the hot fluid flow passage 60, the fins 200 may be spaced apart by the distance D4 from the second end 72 to the fourth end 76 (not shown); and for the cold fluid flow passage 62, the fins 200 may be spaced apart from the first end 70 to the third end 74 by the distance D4 (not shown). Generally, the fins 200 are spaced the distance D5 apart from the respective inlet 84 of the hot fluid flow passage 60 and the inlet 90 of the cold fluid flow passage 62 (not shown). The fins 200 are spaced the distance D6 apart from the respective outlet 94 of the hot fluid flow passage 60 and the outlet 100 of the cold fluid flow passage 62 (not shown).

Each fin 200 has an upstream first end 202 and an opposite downstream second end 203 (FIG. 9). Each fin 200 is substantially planar or flat, and in this example, has a rectangular cross section. In this example, with reference to FIG. 9A, each fin 200 includes a plurality of holes 210 defined through a face 212 of the respective fin 200. In this example, each of the holes 210 is defined normal to the face 212; however, the holes 210 may be defined at other angles relative to the face 212 if desired. The plurality of holes 210 result in each of the fins 200 being perforated, which promotes mixing between the adjacent sub-plurality of flow passages and increases heat transfer. Each of the holes 210 is substantially the same, and has a predefined or predetermined diameter D7. The holes 210 may be defined through the fin 200 in any predefined pattern, and in one example, the fin 200 may include any predetermined number of holes 210. Alternatively, the holes 210 may be defined in clusters or may be defined to be alternating from one side to the other.

As the fins 200 are defined between the plates 42, the fins 200 also each include the plurality of fin undulations 156, which correspond with the plurality of undulations 82. As discussed, the plurality of fin undulations 156 are defined with the smooth periodic oscillation with a constant amplitude that has the plurality of peaks 158 and the plurality of valleys 160.

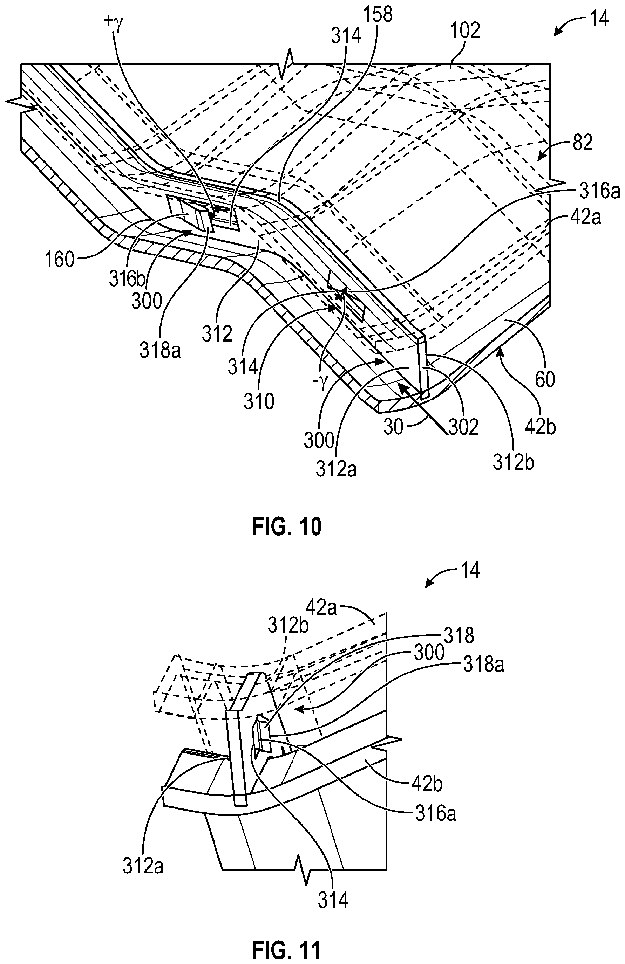

It should be noted that in other embodiments, the fins 150 may be configured differently to promote heat transfer between adjacent plates 42. For example, with reference to FIGS. 10 and 11, a fin 300 is shown. As the fin 300 includes the same or similar components as the fin 150 discussed with regard to FIGS. 1-8, the same reference numerals will be used to denote the same or similar components. FIG. 10 is a cross-sectional end view of a portion of the fin 300, and FIG. 11 is a cross-sectional end view of the fin 300. The fin 300 may be used with the plates 42 instead of or in combination with the fin 150 discussed with regard to FIGS. 1-8 and/or the fin 200 of FIGS. 9 and 9A.

The fins 300 may be integrally formed with adjacent plates 42, and may assist in heat transfer between the hot fluid and the cold fluid. The fins 300 may also assist in the manufacture of the plurality of plates 42 via additive manufacturing by providing supports between the adjacent plates 42. The plurality of fins 300 are defined between the plates 42 to extend parallel to a direction of flow through the respective hot fluid flow passage 60 and cold fluid flow passage 62 defined by the plates 42 (FIG. 5). Each fin 300 cooperates with the respective inlet 84 of the hot fluid flow passage 60 or the inlet 90 of the cold fluid flow passage 62 (FIG. 5) to subdivide the hot fluid flow passage 60 and the cold fluid flow passage 62, respectively, into a plurality of sub-flow passages. These sub-flow passages extend over the length of the plates 42 from the first end 70 to the third end 74 and the second end 72 to the fourth end 76 (FIG. 5), respectively, to increase heat transfer surface area. In one example, each of the hot fluid flow passage 60 and the cold fluid flow passage 62 may each have about 8 fins per inch (in.) to about 60 fins per inch (in.) of the fins 300.

With regard to the hot fluid flow passage 60, the fins 300 may be spaced apart by the distance D4 from the second end 72 to the fourth end 76 (not shown); and for the cold fluid flow passage 62, the fins 300 may be spaced apart from the first end 70 to the third end 74 by the distance D4 (not shown). Generally, the fins 300 are spaced the distance D5 apart from the respective inlet 84 of the hot fluid flow passage 60 and the inlet 90 of the cold fluid flow passage 62 (not shown). The fins 300 are spaced the distance D6 apart from the respective outlet 94 of the hot fluid flow passage 60 and the outlet 100 of the cold fluid flow passage 62 (not shown).

Each fin 300 has an upstream first end 302 and an opposite downstream second end (not shown). Each fin 300 is substantially planar or flat, and in this example, has a rectangular cross section. In this example, each fin 300 includes a plurality of louvers 310 defined through faces 312a, 312b of the respective fin 300. In this example, each of the louvers 310 includes an opening 314 and a protrusion 316, which extends from the opening 314. In one example, the opening 314 is rectangular; however, the opening 314 may have any desired shape. The opening 314 is defined through the faces 312a, 312b of the fin 300. The protrusion 316 is defined to extend outward from the opening 314 at an angle γ. In this example, the protrusions 316 alternate between a positive angle γ and a negative angle γ such that the protrusions 316 alternate faces 312a, 312b of the fin 300 from which they extend. For example, the protrusion 316a extends outwardly from the face 312b at the positive angle γ, while the protrusion 316b extends outwardly from the face 312a at the negative angle γ. In one example, the angle γ is about 5 degrees to about 20 degrees. With reference to FIG. 11, a terminal end 318 of the protrusion 316a may include a flat surface 318a, which extends into the flow of the adjacent flow passage. This flat surface 318a may promote additional breaking up of the boundary layer and additional mixing of the fluid through the sub-plurality of the hot fluid flow passage 60 in this example. The terminal end 318 of the protrusion 316b also includes the flat surface 318a, as shown in FIG. 10.

With continued reference to FIG. 10, the fins 300 are defined between the plates 42, and the fins 300 also each include the plurality of fin undulations 156, which correspond with the plurality of undulations 82. As discussed, the plurality of fin undulations 156 are defined with the smooth periodic oscillation with a constant amplitude that has the plurality of peaks 158 and the plurality of valleys 160.

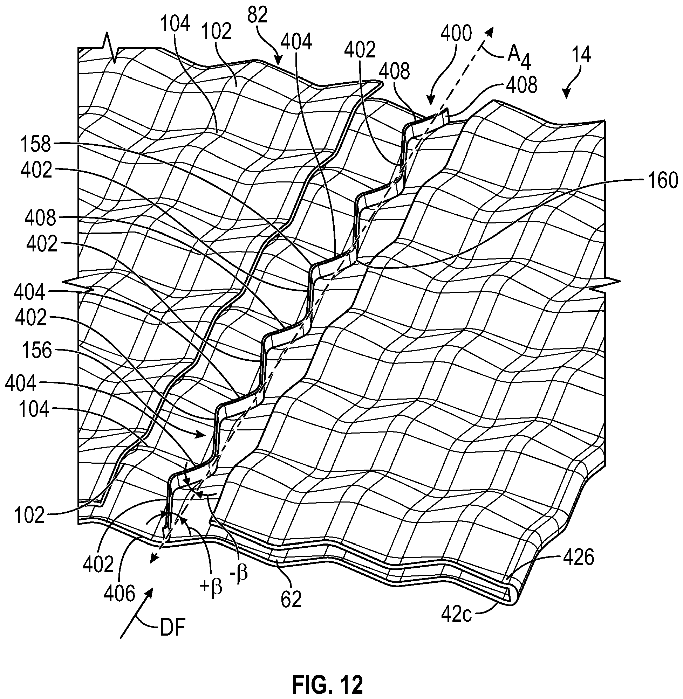

It should be noted that in other embodiments, the fins 150 may be configured differently to promote heat transfer between adjacent plates 42. For example, with reference to FIG. 12, a fin 400 is shown. As the fin 400 includes the same or similar components as the fin 150 discussed with regard to FIGS. 1-8, the same reference numerals will be used to denote the same or similar components. FIG. 12 is a cross-sectional view of a portion of the plates 42 which includes the fin 400. The fin 400 may be used with the plates 42 instead of or in combination with the fin 150 discussed with regard to FIGS. 1-8; the fin 200 of FIGS. 9 and 9A; and/or the fin 300 of FIGS. 10 and 11.

The fins 400 may be integrally formed with adjacent plates 42, and may assist in heat transfer between the hot fluid and the cold fluid. The fins 400 may also assist in the manufacture of the plurality of plates 42 via additive manufacturing by providing supports between the adjacent plates 42. Each fin 400 cooperates with the respective inlet 84 of the hot fluid flow passage 60 or the inlet 90 of the cold fluid flow passage 62 (FIG. 5) to subdivide the hot fluid flow passage 60 and the cold fluid flow passage 62, respectively, into a plurality of sub-flow passages. These sub-flow passages extend over the length of the plates 42 from the first end 70 to the third end 74 and the second end 72 to the fourth end 76 (FIG. 5), respectively, to increase heat transfer surface area. In one example, each of the hot fluid flow passage 60 and the cold fluid flow passage 62 may each have about 8 fins per inch. (in.) to about 60 fins per inch (in.) of the fins 400.

With regard to the hot fluid flow passage 60, the fins 400 may be spaced apart by the distance D4 from the second end 72 to the fourth end 76 (not shown); and for the cold fluid flow passage 62, the fins 400 may be spaced apart from the first end 70 to the third end 74 by the distance D4 (not shown). Generally, the fins 400 are spaced the distance D5 apart from the respective inlet 84 of the hot fluid flow passage 60 and the inlet 90 of the cold fluid flow passage 62 (not shown). The fins 400 are spaced the distance D6 apart from the respective outlet 94 of the hot fluid flow passage 60 and the outlet 100 of the cold fluid flow passage 62 (not shown).

Each fin 400 has an upstream first end 406 and an opposite downstream second end 408. Each fin 400 is substantially planar or flat, and in this example, has a rectangular cross section, which is solid. The plurality of fins 400 are defined between the plates 42 to extend transverse to a direction DF of flow through the respective hot fluid flow passage 60 and cold fluid flow passage 62 defined by the plates 42 (FIG. 5). In this example, the fins 400 are wavy, such that each of the fins 400 is composed of multiple segments 402, 404 that are arranged transverse or oblique to the direction DF. In one example, the segments 402 alternate with the segments 404. The segments 402 extend at a positive angle β relative to an axis A2, while the segments 404 extend at a negative angle β relative to the axis A2. The axis A2 is parallel to the direction DF. In one example, the angle β is about 5 degrees to about 45 degrees. By providing the fins 400 with the segments 402, 404 that are transverse to the direction DF, the fins 400 further assist in breaking up the boundary layer. The fins 400 are defined between the plates 42, and the fins 400 also each include the plurality of fin undulations 156, which correspond with the plurality of undulations 82. As discussed, the plurality of fin undulations 156 are defined with the smooth periodic oscillation with a constant amplitude that has the plurality of peaks 158 and the plurality of valleys 160.

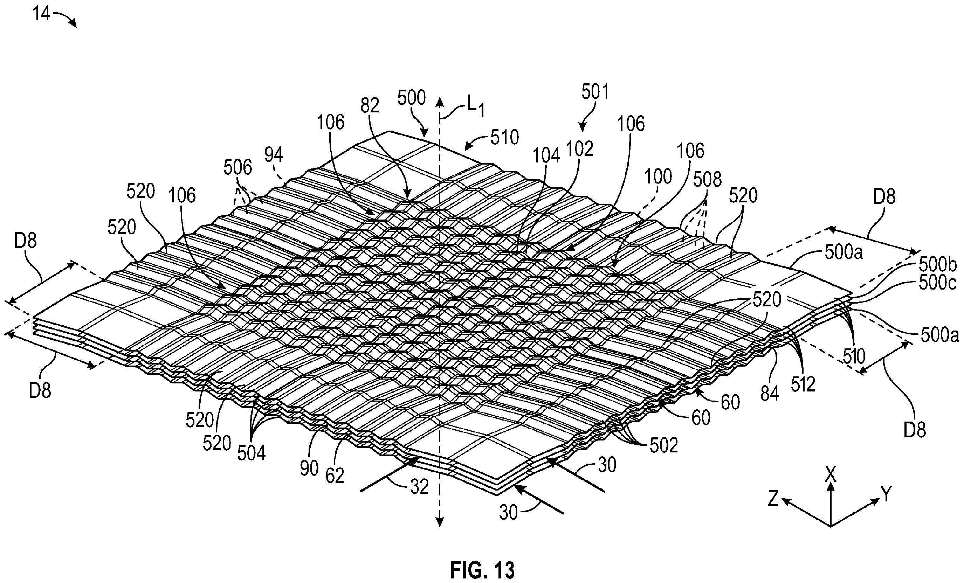

It should be noted that in other embodiments, the plates 42 may be configured differently to promote heat transfer within the core 15 of the heat exchanger 14. For example, with reference to FIG. 13, a plurality of plates 500 for a core 501 of the heat exchanger 14 is shown. As the plates 500 includes the same or similar components as the plates 42 discussed with regard to FIGS. 1-8, the same reference numerals will be used to denote the same or similar components. FIG. 13 is a perspective view of the plates 500.

The plates 500 are defined between the top housing plate 44 and the bottom housing plate 46, and are integrally formed with the top housing plate 44 and the bottom housing plate 46 (FIG. 2). Each of the plates 500 are parallel to each other and to each of the top housing plate 44 and the bottom housing plate 46 (FIG. 2). In FIG. 13, four plates 500a-500d of the plates 500 are shown without the housing 40 for clarity. Two plates 500a, 500b and 500c, 500a cooperate to define the hot fluid flow passages 60 and two plates 500b, 500c cooperate to define the cold fluid flow passage 62. Thus, each trio of plates 500a-500c defines a pair of flow passages, such as the hot fluid flow passage 60 and the cold fluid flow passage 62. The trio of plates 500a-500c are repeatable between the top housing plate 44 and the bottom housing plate 46 to define a number of hot fluid flow passages 60 and cold fluid flow passages 62 within the heat exchanger 14. The heat exchanger 14 includes any predetermined number of trios of the plates 500a-500c that provide the desired heat transfer requirement for the heat exchanger 14. As each trio of plates 500a-500c is the same, a single trio of plates 500a-500c will be described herein with the understanding that the remainder of the trios of plates 500 associated with the heat exchanger 14 is the same.

Each plate 500a-500c includes a first end 502, a second end 504, a third end 506, a fourth end 508, a first surface 510, a second surface 512 and the plurality of undulations 82. The first end 502 is opposite the third end 506, and the second end 504 is opposite the fourth end 508. The first surface 510 is also opposite the second surface 512. The first end 502 of the plate 500a is spaced apart from the first end 502 of the plate 500b to define the inlet 84 for one of the hot fluid flow passages 60. The first end 502 of the plate 500c is coupled to or integrally formed with the first end 502 of the plate 500b by a bullnose portion to enclose the cold fluid flow passage 62. The second end 504 of the plate 500a is coupled to or integrally formed with the second end 504 of the plate 500b by a second bullnose portion to enclose the hot fluid flow passage 60. The second end 504 of the plate 500c is spaced apart from the second end 504 of the plate 500b to define the inlet 90 for the cold fluid flow passage 62. The third end 506 of the plate 500a is spaced apart from the third end 506 of the plate 500b to define the outlet 94 for one of the hot fluid flow passages 60. The third end 506 of the plate 500c is coupled to or integrally formed with the third end 506 of the plate 500b by a third bullnose portion to enclose the cold fluid flow passage 62. The fourth end 508 of the plate 500a is coupled to or integrally formed with the fourth end 508 of the plate 500b by a fourth bullnose portion to enclose the hot fluid flow passage 60. The fourth end 508 of the plate 500c is spaced apart from the fourth end 508 of the plate 500b to define the outlet 100 for the cold fluid flow passage 62. The bullnose portions associated with the plates 500 may be substantially the same as those associated with the plates 42.

If the plate 500a is at the top of the plates 500, the first surface 510 of the plate 500a is integrally formed with the top housing plate 44 (not shown). For trios positioned below the first trio of plates 500a-500c, the first surface 510 of the plate 500a cooperates with the second surface 512 of the plate 500c of an adjacent trio of plates 500a-500c to define one of the cold fluid flow passages 62 (FIG. 2). The second surface 512 of the plate 500a is spaced apart from the first surface 510 of the plate 500b and cooperates with the first surface 510 of the plate 500b to define the hot fluid flow passage 60. The first surface 510 of the plate 500b is spaced apart from the second surface 512 of the plate 500a and cooperates to define the hot fluid flow passage 60. The second surface 512 of the plate 500b is spaced apart from the first surface 510 of the plate 500c and cooperates with the first surface 510 of the plate 500c to define the cold fluid flow passage 62. The first surface 510 of the plate 500c is spaced apart from the second surface 512 of the plate 500b to define the cold fluid flow passage 62. If the plate 500c is at the bottom of the plates 500, the second surface 512 of the plate 500c is integrally formed with the bottom housing plate 46 (not shown). For trios positioned above the last trio of plates 500a-500c in the heat exchanger 14, the second surface 512 of the plate 500c cooperates with the first surface 510 of the plate 500c of an adjacent trio of plates 500a-500c to define one of the hot fluid flow passages 60. Each of the hot fluid flow passages 60 alternate with a respective one of a plurality of the cold fluid flow passages 62.

The plurality of undulations 82 are defined in each of the plates 500a-500c. In this example, the plurality of undulations 82 are defined in each of the plates 500a-500c so as to be spaced a distance apart from each of the first end 502, the second end 504, the third end 506 and the fourth end 508. In one example, the plurality of undulations 82 are spaced a predetermined distance D8 from each of the first end 502, the second end 504, the third end 506 and the fourth end 508. In one example, the distance D8 is about 0.1 inches (in.) to about 0.5 inches (in.). Thus, in this example, the plurality of undulations 82 cover a portion of each of the plates 500a-500c. The plurality of undulations 82 are defined such that both the first surface 510 and the second surface 512 follow the undulations 82. In one example, the plurality of undulations 82 are defined with the smooth periodic oscillation with a constant amplitude that has the plurality of peaks 102 and the plurality of valleys 104. In this example, the plurality of undulations 82 are defined as a sinusoidal wave. Optionally, one or more ribs 520 may be defined on the plates 500a-500c between the plurality of undulations 82 and the respective one of the first end 502, the second end 504, the third end 506 and the fourth end 508.

As discussed, the plurality of undulations 82 may be arranged in rows 106 from the second end 72 to the fourth end 76 and from the first end 70 to the third end 74 such that the plurality of undulations 82 are defined in two dimensions. Each row 106 includes a sub-plurality of the peaks 102 and a sub-plurality of the valleys 104. The plurality of undulations 82 break up the boundary layer of the hot fluid and the cold fluid as the hot fluid and the cold fluid moves through the respective one of the hot fluid flow passage 60 and the cold fluid flow passage 62. By breaking up the boundary layer, the heat transfer between the hot fluid and the cold fluid is increased. As each of the plates 500 are parallel to each other, each of the plurality of peaks 102 are coaxially aligned along the longitudinal axis L1 of the heat exchanger 14. In addition, each of the plurality of valleys 104 are coaxially aligned along the longitudinal axis L1 of the heat exchanger 14. In addition, due to the sinusoidal wave that defines of the plurality of undulations 82, the flow area is constant from each inlet 84 of the hot fluid flow passage 60 to the outlet 94 of the respective hot fluid flow passage 60. Further, the flow area is constant from each inlet 90 of the cold fluid flow passage 62 to the outlet 100 of the respective cold fluid flow passage 62. Stated another way, the flow area of each of the hot fluid flow passages 60 is constant in the Z-axis. The flow area of each of the cold fluid flow passages 62 is constant in the Y-axis. By providing the flow area constant in each of the hot fluid flow passages 60 and the cold fluid flow passages 62, the pressure drop is minimized.

In one example, the core 15, 501 of the heat exchanger 14 is manufactured by an additive manufacturing system. The additive manufacturing system is any system that is capable of creating, manufacturing or building a three-dimensional part, such as the core 15, 501 of the heat exchanger 14. In one example, the additive manufacturing system is a direct metal laser sintered (DMLS) system. DMLS is a commercially available laser-based rapid prototyping and tooling process by which complex parts may be directly produced by precision melting and solidification of metal powder into successive layers of larger structures, each layer corresponding to a cross-sectional layer of the 3D component. It should be noted that although the description herein refers to DMLS as the additive manufacturing system, it should be noted that in other embodiments, the additive manufacturing system may comprise micro-pen deposition in which liquid media is dispensed with precision at the pen tip and then cured; selective laser sintering in which a laser is used to sinter a powder media in precisely controlled locations; laser wire deposition in which a wire feedstock is melted by a laser and then deposited and solidified in precise locations to build the product; electron beam melting; laser engineered net shaping; and direct metal deposition.

In the example of DMLS, as is generally known, in order to produce the core 15, 501 of the heat exchanger 14, a model, such as a design model, of the component may be defined in any suitable manner. For example, the model may be designed with computer aided design (CAD) software and may include three-dimensional ("3D") numeric coordinates of the entire configuration of the heat exchanger 14 including both external and internal surfaces. In one exemplary embodiment, the model may include a number of successive two-dimensional ("2D") cross-sectional slices that together form the 3D component. As is generally known, the speed, position, and other operating parameters of a laser beam of the additive manufacturing system are controlled to selectively fuse the powder of a build material into larger structures by rapidly melting the powder particles that may melt or diffuse into the solid structure below, and subsequently, cool and resolidify. As such, based on the control of the laser beam, each layer of build material may include unfused and fused build material that respectively corresponds to the cross-sectional passages and walls that form the core 15, 501 of the heat exchanger 14. Upon completion of a respective layer, a roller or wiper pushes a portion of a build material from a delivery device to form an additional layer of build material on a working plane of the fabrication device. The laser beam is movably supported relative to the component and is again controlled to selectively form another cross-sectional layer until the core 15, 501 of the heat exchanger 14 is formed. By manufacturing the heat exchanger 14 via additive manufacturing, the size and shape of the heat exchanger 14 may be tailored to fit the space associated with the thermodynamic system 10 of the vehicle 12 (FIG. 1).

With the heat exchanger 14 formed, with reference to FIGS. 1 and 2, the hot inlet 30 of the heat exchanger 14 is coupled to the hot fluid source 20 and the cold inlet 32 is coupled to the cold fluid source 22. The first outlet 34 is coupled to a downstream consumer, and the second outlet 36 is coupled to a downstream consumer. With reference to FIG. 3, as the hot working fluid is received into the hot inlet 30, the hot fluid flows into the inlets 84 associated with each of the hot fluid flow passages 60. The hot fluid flows through the hot fluid flow passages 60 to the outlet 94 of the hot fluid flow passages 60. With reference to FIG. 6, as the cold working fluid is received into the cold inlet 32, the cold fluid flows into the inlets 90 associated with each of the cold fluid flow passages 62. The cold fluid flows through the cold fluid flow passages 62 to the outlet 100 of the cold fluid flow passages 62. The plurality of undulations 82 break up the boundary layer as the hot fluid flows through the hot fluid flow passages 60 and the cold fluid flows through the cold fluid flow passages 62. As the hot fluid flows through the hot fluid flow passages 60 heat is conducted via the plates 42, 500 and the fins 150, 200, 300, 400 into the cold fluid as the cold fluid flows through the cold fluid flow passages 62, which reduces a temperature of the hot fluid. As the flow area through the hot fluid flow passages 60 is the same or constant from the inlet 84 to the outlet 94, and the cold fluid flow passages 62 is the same or constant from the inlet 90 to the outlet 100, the pressure drop through the heat exchanger 14 is minimized.

Stated another way, the plurality of undulations 82 in the plates 42 enhance heat transfer by causing the fluid boundary layer against the wall of the plate 42 to slightly separate from the wall of the plate 42 and mix with the bulk flow. The smooth curve of the plurality of undulations 82 force the fluid to change direction slightly and set up secondary flows which scrub the boundary layer and move the boundary layer which has been heated or cooled by contact with the hot or cold wall of the plate 42 into the bulk flow. Following the movement of the boundary layer into the bulk flow, the warmer or cooler bulk flow then replaces the fluid along the wall of the plate 42 for continued heat transfer. The pressure drop is minimized by keeping the flow area constant between the plates 42 along the flow path. This eliminates abrupt shock losses which generally occur when there are significant area changes along the flow path. While the secondary flows which are caused by the plurality of undulations 82 may result in energy dissipation, these losses are much less than shock losses due to flow area changes. Since the plurality of undulations 82 is part of the plate 42 which separates the two working fluids, the plurality of undulations 82 provides the enhancement in heat transfer on both the hot and cold surfaces of the plates 42. Putting the enhancement in the separating plate 42 allows for further enhancement in the flow passages such as additional fins or other extended surface types. For a particular application the flow passage height on each side and/or additional enhancement (fin geometry) may be varied to meet the goals associated with the heat exchanger 14 (meeting different pressure drops on each side, meeting certain envelope restrictions or minimizing weight).

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A heat exchanger, comprising:
a first plate defining a first plurality of undulations that extend along a first axis and a second axis;
a second plate defining a second plurality of undulations, the second plate spaced apart from and coupled to the first plate to define a first fluid flow passage between the first plurality of undulations and the second plurality of undulations, the first fluid flow passage having a first inlet and a first outlet, and a first flow area of the first fluid flow passage is constant from the first inlet to the first outlet; and
a third plate defining a third plurality of undulations, the third plate spaced apart from and coupled to the second plate to define a second fluid flow passage between the second plurality of undulations and the third plurality of undulations, the second fluid flow passage discrete from the first fluid flow passage and having a second inlet and a second outlet, and a second flow area of the second fluid flow passage is constant from the second inlet to the second outlet.

2. The heat exchanger of Claim 1, wherein the second plurality of undulations are defined such that a peak of one of the second plurality of undulations is coaxially aligned with a peak of one of the first plurality of undulations and a peak of one of the third plurality of undulations.

3. The heat exchanger of Claim 1, further comprising at least one first fin within the first fluid flow passage that interconnects the first plate with the second plate, and at least one second fin within the second fluid flow passage that interconnects the second plate with the third plate.

4. The heat exchanger of Claim 3, wherein at least the at least one first fin has a plurality of fin undulations that correspond with at least the first plurality of undulations.

5. The heat exchanger of Claim 3, wherein at least the at least one first fin is perforated.

6. The heat exchanger of Claim 1, wherein the first plate, the second plate and the third plate are parallel to each other and equidistant from each other.

7. The heat exchanger of Claim 1, wherein the first plurality of undulations, the second plurality of undulations and the third plurality of undulations have the same pattern.

8. The heat exchanger of Claim 1, wherein the first plurality of undulations, the second plurality of undulations and the third plurality of undulations are each defined by a sinusoidal wave that extends along the first axis and the second axis.

9. The heat exchanger of Claim 1, further comprising a plurality of the first plate, the second plate and the third plate that are integrally formed between a first housing plate and a second housing plate.

10. The heat exchanger of Claim 1, further comprising at least one first fin within the first fluid flow passage that interconnects the first plate with the second plate and the at least one first fin is comprised of a plurality of segments, each segment of the plurality of segments transverse to an axis that extends parallel to a flow direction through the first fluid flow passage such that the at least one first fin is wavy.

11. The heat exchanger of Claim 1, further comprising at least one first fin within the first fluid flow passage that interconnects the first plate with the second plate, and the at least one first fin includes a plurality of fin undulations and a plurality of louvers, the plurality of fin undulations correspond with at least the first plurality of undulations, and each louver of the plurality of louvers including a protrusion that extends outwardly from either a first face of the at least one first fin or a second face of the at least one first fin.

12. The heat exchanger of Claim 1, wherein each of the first plate, the second plate and the third plate has a first end, a second end, a third end and a fourth end, and the first plurality of undulations, the second plurality of undulations and the third plurality of undulations are spaced apart from each of the first end, the second end, the third end and the fourth end of the respective one of the first plate, the second plate and the third plate.

13. The heat exchanger of Claim 1, wherein each of the first plate, the second plate and the third plate has a first end, a second end, a third end and a fourth end, and the first plurality of undulations, the second plurality of undulations and the third plurality of undulations extend along an entirety of the respective one of the first plate, the second plate and the third plate from the respective first end to the respective third end and from the respective second end to the respective fourth end.

14. The heat exchanger of Claim 1, wherein the first plate is integrally formed with the second plate and the second plate is integrally formed with the third plate.
